# EUROPÄISCHE PATENTSCHRIFT

(11) **EP 2 482 046 B1**
(45) Veröffentlichungstag und Bekanntmachung des Hinweises auf die Patenterteilung: **24.02.2016**
(21) Anmeldenummer: 11195623.1
(22) Anmeldetag: 23.12.2011
(51) Int. Cl.: G01F 23/296

(54) **Vorrichtung zur Ermittlung eines Füllstandes eines Mediums**
Device for determining a fill level of a medium
Dispositif de détermination d'un état de remplissage d'un milieu

(30) Priorität: 14.01.2011 DE 102011008585
(43) Veröffentlichungstag der Anmeldung: 01.08.2012
(73) Patentinhaber: Hella KGaA Hueck & Co., 59552 Lippstadt (DE)
(72) Erfinder: Niemann, Thomas, 27753 Delmenhorst (DE); Kück, Thomas, 28844 Weyhe-Kirchweyhe (DE); Hessenkämper, David, 28359 Bremen (DE); Zoyke, Ingo, 28816 Stuhr (DE); Palloks, Jürgen, 26655 Westerstede (DE); Claassen, Herbert, 28201 Bremen (DE)
(74) Vertreter: Siekmann, Gunnar

(56) Entgegenhaltungen:
- EP-A1- 2 366 984
- WO-A1-2008/009277
- DE-A1-102009 036 888
- US-A1- 2007 193 350

## Beschreibung

Die Erfindung bezieht sich auf eine Vorrichtung zur Ermittlung eines Füllstandes eines Mediums insbesondere innerhalb eines Sammelbehalters, mit zumindest einer mit dem Sammelbehälter medienleitend verbundenen Messkammer, in der ein Ultraschallsensor angeordnet ist, und mit wenigstens einer der Messkammer vorgeschalteten Vorkammer, welche zumindest eine Einlassöffnung für das Medium aus dem Sammelbehälter aufweist.

Vorrichtungen vorbekannter Gattung finden insbesondere in Sammelbehältem für flüssige Medien Anwendung, wie zum Beispiel in einem Ölauffangbehälter eines Motors, um insbesondere den Füllstand des Mediums, wie zum Beispiel Öl oder Kraftstoff, innerhalb des Behälters ermitteln zu können. Die Vorrichtungen weisen dazu üblicherweise einen Ultraschallsensor auf, der häufig in einem unteren Bereich des Sammelbehälters angeordnet ist und einen in Richtung der Oberfläche des Mediums ausgerichteten Messbereich aufweist. Die vom Ultraschallsensor ausgestrahlten Messsignale werden in der Regel an der Oberfläche der Flüssigkeit reflektiert und die reflektierten Signale wiederum vom Sensor aufgenommen. Aus der ermittelten Laufzeit zwischen Ausgabe und Aufnahme der insbesondere als Schallwellen vorliegenden Messsignale lässt sich dann der Füllstand im Sammelbehälter bestimmen. Speziell bei Messungen des Füllstandes im Ölauffangbehälter eines Motors kann es zu Ungenauigkeiten während der Messung kommen, da die fortlaufende Umwälzung des Mediums üblicherweise zum Aufschäumen des Öls führt, wobei sich Gasbläschen im Medium bilden. Die verwendeten Vorrichtungen weisen zur Beruhigung des zu messenden Mediums eine mit dem Sammelbehälter medienleitend verbundene, separate Messkammer auf, innerhalb der der Ultraschallsensor angeordnet ist. Um das Medium ausreichend vor dem Eintritt in die Messkammer zu beruhigen und gleichzeitig das Ausscheiden der Gasbläschen aus dem Medium zu erreichen, ist der Messkammer häufig wenigstens eine Vorkammer vorgeschaltet. Die Vorkammer ist mit einer Eintrittsöffnung für das Medium aus dem Sammelbehälter ausgerüstet und weist eine Austrittsöffnung für eine medienleitende Verbindung mit der Messkammer auf. Des Weiteren ist die Vorkammer mit einer Entlüftung versehen, die bis über die Oberfläche des Mediums reicht.

Eine solche Vorrichtung geht aus der WO 2008/009277 A1 hervor, wobei in einem langgestreckten Gehäuse eine Messkammer und wenigstens eine Vorkammer ausgebildet ist. Die Vorkammer ist zumindest teilweise vor oder um die Messkammer angeordnet, wobei die äußere Vorkammer als Einlasskammer für die zu messende Flüssigkeit ausgebildet ist und flüssigkeitsdurchleitend mit der Messkammer verbunden ist. Um insbesondere verschäumte Flüssigkeiten in der Vorkammer zu beruhigen, können in dieser Trennwände eingezogen sein, durch die eine Verlängerung des Strömungsweges in der Vorkammer sowie eine Verringerung der Fließgeschwindigkeit und der Verwirbelungen der einströmenden Flüssigkeit erreicht werden soll.

Aus der EP 2 366 984 A1 ist eine Vorrichtung zur Messung eines Füllstandes in einem Behälter mit einem Ultraschallsensor bekannt. Diesem Ultraschallsensor ist ein Dämpfungsbecher mit einer Vorkammer zugeordnet. Die Vorkammer zeichnet sich dabei durch zwei horizontal übereinander liegende Ebenen aus, wobei zuerst die obere und dann die untere Ebene durchströmt wird. In den Ebenen ist zudem eine geometrische Struktur vorgesehen, die derart gestaltet ist, dass die Ebenen von der Flüssigkeit gegenläufig zueinander, insbesondere mäanderförmig, durchströmt werden. In der US 2007/0193350 A1 ist eine Vorrichtung und ein Verfahren zur Messung von Medien beschrieben. Die Vorrichtung weist dazu eine in zwei Bereiche aufgeteilte akustische Röhre auf, wobei ein erster Bereich als Messkammer ausgebildet ist und ein zweiter Bereich als Vorkammer ausgebildet ist. Dabei können die Innenseiten der Wandung des zweiten Bereichs zur Beruhigung von einströmendem Medium mit einem porösen, durchströmbaren Material, wie z. B. einem Gitter, Drahtgeflecht, Stahlwolle oder Stuck ausgestattet sein, das den zweiten Bereich begrenzt.

An derartigen Vorrichtungen zur Ermittlung eines Füllstandes kann es unter anderem durch die Überlagerung physikalischer Zustandsgrößen im Zusammenhang mit der konstruktiven Ausgestaltung der Vorrichtung zu bestimmten physikalischen Effekten kommen, wie zum Beispiel der Ausbildung von zwei stationären, entgegengesetzt gerichteten Strömungen, auch als Schlichtingströmung bekannt. Diese Strömungen entstehen bei bestimmten Betriebszuständen des Motors, wie verschiedenen Drehzahlen und den davon abhängigen Schwingungen, was dann zu einem Hineindrücken bzw. Herausziehen des Mediums in die oder aus den Kammern der Vorrichtung führt. Demzufolge steigt oder fällt der Pegel des Mediums in der Messkammer übermäßig an bzw. ab, was eine relativ ungenaue Füllstandsmessung zur Folge hat.

Der Erfindung liegt daher die Aufgabe zugrunde, eine Vorrichtung der vorbezeichneten Gattung dahingehend zu verbessern, dass stets eine zuverlässige Messung des Füllstandes Innerhalb der Messkammer gewährleistet ist.

Die Lösung der Aufgabe erfolgt erfindungsgemäß durch eine Vorrichtung mit den Merkmalen des Patentanspruches 1. Vorteilhafte Weiterbildungen und Ausgestaltungen der Erfindung sind in den Ansprüchen 2 bis 6 angegeben.

Bei einer Vorrichtung zur Ermittlung eines Füllstandes eines Mediums innerhalb eines Sammelbehälters, mit zumindest einer mit dem Sammelbehälter medienleitend verbundenen Messkammer, in der ein Ultraschallsensor angeordnet ist, und mit wenigstens einer der Messkammer vorgeschalteten Vorkammer, welche zumindest eine Einlassöffnung für das Medium aus dem Sammelbehälter aufweist, ist nach der Erfindung vorgesehen, dass in zumindest einem Teilbereich der Vorkammer ein Strömungsdämpfer für das Medium angeordnet ist, dass der Strömungsdämpfer zumindest ein Flächenelement ist, welches wenigstens eine Umlenkfläche mit einer Überströmkante aufweist, dass das Flächenelement an wenigstens einer seiner Umlenkflächen eine Vielzahl daran abstehender Dämpfungskörper aufweist, und dass jeder Dämpfungskörper in Erstreckungsrichtung einen sich verändernden Querschnitt aufweist.

Mit Hilfe einer derartig erfindungsgemäß ausgebildeten Vorrichtung, in dessen Vorkammer wenigstens ein Strömungsdämpfer für das Medium vorgesehen ist, werden durch den Strömungsdämpfer mögliche unerwünschte Strömungen bzw. Strudel des Mediums behindert bzw. derart verwirbelt und dadurch auf eine vorteilhaft geringe Größe minimiert. Somit haben die gegebenenfalls noch zeitweise auftretenden Strömungen keinen nachteiligen Einfluss mehr auf den Pegel des Mediums innerhalb der Messkammer. Demzufolge wird auch die durchgeführte Füllstandsmessung nicht mehr beeinflusst. Der Strömungsdämpfer ist dabei derart in der Messkammer angeordnet, dass er sich in dem eigentlichen Entstehungsbereich der Strömungen befindet. Damit kann dieser optimal der Entstehung insbesondere einer Hauptströmung und einer entgegengesetzt gerichteten Sekundärströmung entgegenwirken.

Das Flächenelement, welches senkrecht zur Flächennormalen in der Vorkammer ausgerichtet ist, erstreckt sich insbesondere über die gesamte Breite eines Teilabschnitts und über eine vorbestimmte Höhe der Vorkammer. Das in eine jeweilige Vorkammer einströmende Medium wird somit wirkungsvoll an der Umlenk- bzw. Prallfläche umgelenkt. Bevorzugt weist das Flächenelement nur eine einzige Überströmkante auf. Mit einem solchen Konturteil lässt sich zudem der Einlassbereich der Vorkammer entsprechend in seiner Größe vorteilhaft verändern bzw. anpassen, so dass die Entstehung von Über- oder Unterdrücken erzeugenden Strömungen im Einlassbereich einer Vorkammer mit Vorteil verhindert ist.

Das Flächenelement weist an wenigstens einer seiner Umlenkflächen eine Vielzahl daran abstehender Dämpfungskörper auf, mit Hilfe denen zusätzlich im Einlassbereich der Vorkammer der Entstehung von Strömungen entgegengewirkt ist. Mit Hilfe der Dämpfungskörper an insbesondere beiden Umlenkflächen des Flächenelements ist die Zuverlässigkeit der Vorrichtung bei der Ermittlung eines Füllstandes in einem Sammelbehälter mit Vorteil weiter verbessert. Der Entstehung einer Schlichtingsströmung wird bestenfalls entgegengewirkt, indem die in eine mögliche Strömung vorstehenden Dämpfungskörper die Strömung verwirbeln, so dass diese diffus wird. Dadurch entsteht kein Druckaufbau bzw. kein Druckabfall an der Einlassöffnung der Vorrichtung bzw. einer jeweiligen Vorkammer, wodurch stets zuverlässig ein übermäßiger Anstieg bzw. Abfall des Flüssigkeitspegels in der Messkammer vermieden ist.

Nach einer vorteilhaften Weiterbildung der Erfindung ist vorgesehen, dass der Messkammer mehrere Vorkammern vorgeschaltet sind, die in Reihe hintereinander medienleitend verbunden sind. Die Verwendung von mehreren Vorkammern hat den Vorteil, dass das Medium auf einem verlängerten Weg zur Messkammer optimal beruhigt wird und gleichzeitig sich im Medium befindliche Gasbläschen mit Vorteil vollständig ausgeschieden werden. Bevorzugt können die der Messkammer vorgeschalteten Vorkammern auf unterschiedlichen Ebenen ausgebildet sein. Dabei ist vorzugsweise die direkt mit dem Sammelbehälter verbundene Vorkammer oberhalb einer weiteren, nachgeschalteten Vorkammer angeordnet, so dass eine selbsttätige Entlüftungsfunktion sichergestellt ist. Der Eintritt von Gasbläschen in die darunter liegende Vorkammer oder gar in die Messkammer lässt sich dadurch auf besonders vorteilhafte Weise vermeiden.

In diesem Zusammenhang kann es vorgesehen sein, dass mehrere der Vorkammern mit einem Strömungsdämpfer ausgerüstet sind. Mittels mehreren Strömungsdämpfern kann innerhalb der Vorrichtung somit an mehreren Stellen gleichzeitig der Ausbildung von sich nachteilig auswirkender Strömungen mit Vorteil zumindest entgegengewirkt werden. Bestenfalls werden mögliche Strömungen an ihrer Entstehung sogar vollständig gehindert. Die Strömungsdämpfer werden dabei insbesondere in Vorkammerbereichen ausgebildet, die Ecken oder abgewinkelte Kanten aufweisen.

Jeder Strömungsdämpfer ist vorzugsweise dem Einlassbereich einer jeweiligen Vorkammer zugeordnet, da die Wahrscheinlichkeit des Auftretens zweier, als Schlichtingströmung bekannter Strömungen in diesem Bereich der Vorkammer am größten ist. Ursache solcher physikalischen Effekte ist oftmals im Einlaßbereich der Vorkammer eine unmittelbar nach der Einlassöffnung erfolgende Umlenkung des Mediums mittels einer Kammerwandung, die insbesondere eine Verlängerung des Strömungsweges für das Medium zur Messkammer vorsieht. Zu diesem Zweck ist die Vorkammer beispielsweise mäanderförmig ausgeführt, weshalb die Vorkammer relativ viele Windungen aufweist, welche eine zwangsgerichtete Führung des Mediums in der Vorkammer bewirken. An zum Beispiel einer kreisförmig ausgebildeten Vorkammer kann, anstatt eines Mäanders, beispielsweise auch eine spiralförmige Struktur innerhalb der Vorkammer vorgesehen sein.

Die bevorzugt an beiden Umlenkflächen ausgebildeten Dämpfungskörper des sich insbesondere über die gesamte Breite einer jeweiligen Vorkammer erstreckenden Strömungsdämpfers unterteilen einen jeweiligen Einströmbereich einer Vorkammer bestenfalls in eine Vielzahl von Teilbereichen. Damit ist die Entstehung von entgegengesetzt gerichteten Strömungen in diesen Bereichen nahezu ausgeschlossen. Die Dämpfungskörper stehen dabei senkrecht an den Umlenkflächen des als Flächenelement ausgebildeten Strömungsdämpfers ab und erstrecken sich insbesondere von der Umlenkfläche bis nahezu an einen benachbarten Wandungsbereich einer jeweiligen Vorkammer. Jeder einzelne Dämpfungskörper kann eine beliebige geometrische Grundform aufweisen, wie z.B. kreisrund oder polygon. In Erstreckungsrichtung können sich die Querschnitte der Dämpfungskörper in einem Teilabschnitt verjüngen und in einem anderen Teilabschnitt auch wieder erweitern.

Weiterhin betrifft die Erfindung einen Motor, insbesondere einen Verbrennungsmotor für ein Kraftfahrzeug, für den selbstständiger Schutz beansprucht wird, wobei der Motor sich dadurch auszeichnet, dass er eine Vorrichtung nach einem der Ansprüche 1 bis 4 umfasst. An einem Motor, welcher mit einer derartig erfindungsgemäßen Vorrichtung zur Ermittlung des Füllstandes eines Mediums ausgerüstet sein kann, lässt sich insbesondere der Füllstand des Motoröls stets zuverlässig ermitteln. Dadurch können Schäden, aufgrund möglicher, nicht detektierter Minderpegel des Motoröls mit Vorteil ausgeschlossen werden.

Darüber hinaus wird Schutz für ein Fahrzeug, insbesondere ein Kraftfahrzeug beansprucht, welches einen Motor aufweist, der mit einer erfindungsgemäßen Vorrichtung zur Erfassung eines Füllstandes ausgerüstet ist.

Mögliche Ausführungsbeispiele der Erfindung, aus denen sich weitere erfinderische Merkmale ergeben, sind in der Zeichnung dargestellt. Es zeigen:
- Fig. 1:: eine perspektivische Ansicht einer ersten Ausführungsform einer erfindungsgemäßen Vorrichtung im Teilschnitt;
- Fig. 2:: eine perspektivische Ansicht der Vorrichtung nach Fig. 1 im Schnitt;
- Fig. 3:: eine perspektivische Ansicht eines zweiten Ausführungsbeispiel einer Vorrichtung die nicht Teil der Erfindung ist, und
- Fig. 4:: eine Schnittdarstellung der Vorrichtung nach Fig. 3, die nicht Teil der Erfindung ist.

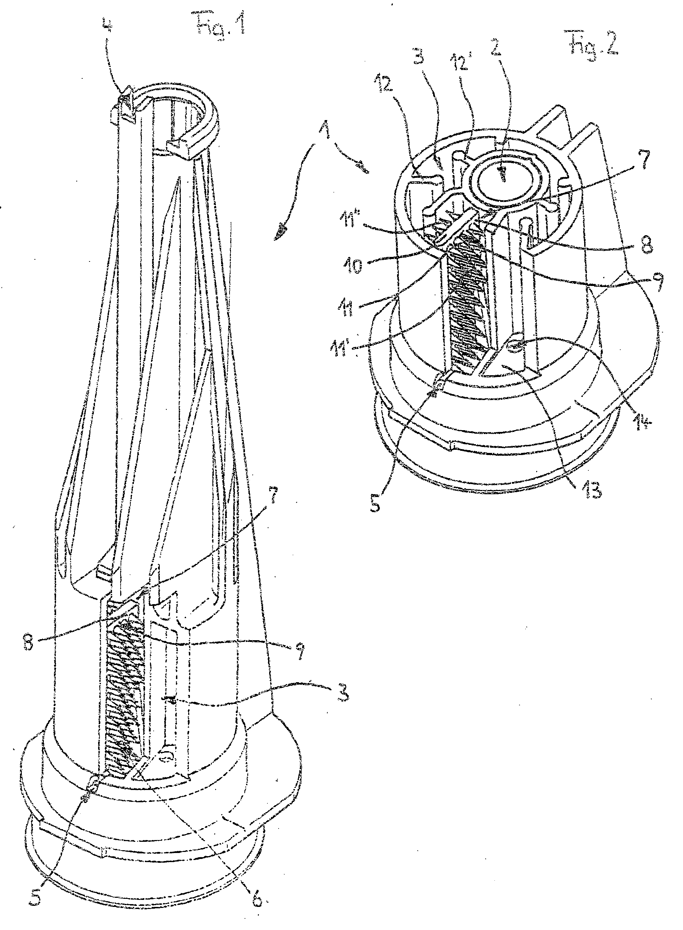

Mit 1 ist eine Vorrichtung zur Ermittlung eines Füllstandes eines Mediums in einem nicht dargestellten Behälter bezeichnet, welche wenigstens eine Messkammer 2 (Fig. 2) aufweist, in der der Pegelstand des Mediums mit Hilfe eines nicht gezeigten Ultraschallsensors ermittelt wird. Der Messkammer 2 ist wenigstens eine erste Vorkammer 3 vorgeschaltet, In der sich insbesondere das aus dem Behälter in die Vorkammer 3 einströmende Medium beruhigen soll und mögliche, im flüssigen Medium befindliche Gasbläschen ausgeschieden werden. Zu diesem Zweck weist die Vorrichtung wenigstens eine Entlüftung 4 auf. Des Weiteren ist unmittelbar hinter der Einlassöffnung 5 der ersten Vorkammer 3 in dessen Einlassbereich 6 ein Strömungsdämpfer 7 vorgesehen. Mit Hilfe des Strömungsdämpfers 7 sollen mögliche sich unmittelbar hinter der Eintrittsöffnung in bestimmten Betriebszuständen eines Motors willkürlich ausbildende, entgegengesetzt gerichtete Strömungen an ihrer Entstehung gehindert werden.

Wie die Fig. 2 verdeutlicht, ist der Strömungsdämpfer 7 insbesondere als ein Flächenelement 8 mit wenigstens einer Umlenkfläche 9 ausgebildet und weist wenigstens eine Überströmkante 10 auf. Das sich insbesondere über die gesamte Breite der kanalartig ausgebildeten Vorkammern 3 erstreckende Flächenelement 8 weist an seinen Umlenkflächen 9, 9' eine Vielzahl von kegelförmigen Dämpfungskörpern 11, 11', 11" auf. Die Dämpfungskörper 11, 11', 11" stehen jeweils senkrecht zu den Umlenkflächen 9, 9' ab und reichen bis nahezu an einen benachbarten Wandbereich der Vorkammer 3. Des Weiteren ist der Fig. 2 zu entnehmen, dass die Vorkammer kanalartig ausgebildet ist, wobei die Vorkammer 3 zumindest einen Teilabschnitt der Messkammer 4 umhüllt. Die Vorkammer 3 weist darüber hinaus etwa quer in den Kanal vorstehende Stege 12, 12' auf, die eine Umlenkung und somit eine Verlängerung des Strömungsweges für das Medium bewirken. Am Boden 13 der Vorkammer 3 ist eine Durchgangsöffnung 14 vorgesehen, die eine Verbindung zu einer weiteren Vorkammer herstellt, welche unterhalb der ersten Vorkammer 3 ausgebildet ist.

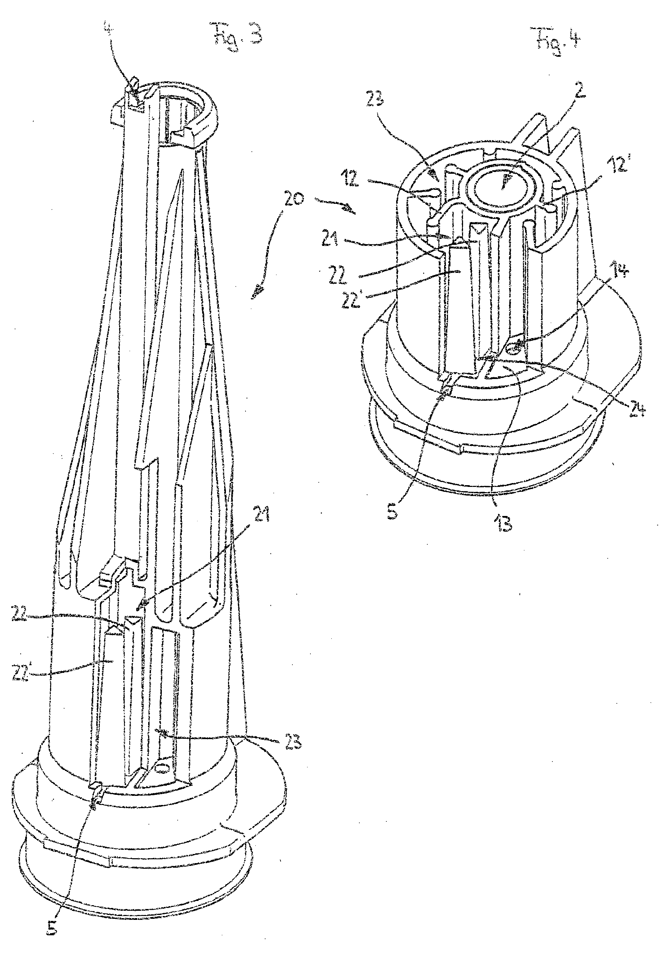

In den Fig. 3 und 4 ist ein Ausführungsbeispiel einer Vorrichtung 20 die nicht Teil der Erfindung ist, dargestellt, welche grundlegend eine ähnliche Ausgestaltung wie die zuvor beschriebene Vorrichtung 1 aufweist. An Stelle eines Flächenelementes sind als Strömungsdämpfer 21 zwei umströmbare Konturteile 22, 22' in der Vorkammer 23 vorgesehen. Die Konturteile sind wiederum unmittelbar hinter der Einlassöffnung 5 im Einlassbereich 24 der Vorkammer 23 angeordnet, wobei die Konturteile 22, 22' in dieser Ausführung eine dreieckige Grundfläche aufweisen. Jedes Konturteil erstreckt sich des Weiteren senkrecht zur Flächennormalen nach oben. Die Querschnitte der Konturteile verjüngen sich dabei gleichmäßig bis zum oberen Ende. Gleiche Bauteile sind mit gleichen Bezugszahlen bezeichnet.

## Patentansprüche

1. Vorrichtung zur Ermittlung eines Füllstandes eines Mediums innerhalb eines Sammelbehälters, mit zumindest einer mit dem Sammelbehälter medienleitend verbundenen Messkammer, in der ein Ultraschallsensor angeordnet ist, und mit wenigstens einer der Messkammer vorgeschalteten Vorkammer, welche zumindest eine Einlassöffnung für das Medium aus dem Sammelbehälter aufweist,
**dadurch gekennzeichnet,**
**dass** in zumindest einem Teilbereich der Vorkammer (3, 23) wenigstens ein Strömungsdämpfer (7, 21) für das Medium angeordnet ist,
**dass** der Strömungsdämpfer (7) zumindest ein Flächenelement (8) ist, welches wenigstens eine Umlenkfläche (9, 9') mit einer Überströmkante (10) aufweist, dass das Flächenelement (8) an wenigstens einer seiner Umlenkflächen (9, 9') eine Vielzahl daran abstehender Dämpfungskörper (11, 11', 11 ") aufweist, und dass jeder Dämpfungskörper (11, 11', 11") in Erstreckungsrichtung einen sich verändernden Querschnitt aufweist.

2. Vorrichtung nach Anspruch 1, **dadurch gekennzeichnet, dass** der Messkammer (4) mehrere Vorkammern (3, 23) vorgeschaltet sind, die in Reihe hintereinander medienleitend verbunden sind.

3. Vorrichtung nach einem der Ansprüche 1 und 2, **dadurch gekennzeichnet, dass** mehrere der Vorkammern (3, 23) mit einem Strömungsdämpfer (7, 21) ausgerüstet sind.

4. Vorrichtung nach einem der Ansprüche 1 bis 3, **dadurch gekennzeichnet, dass** jeder Strömungsdämpfer (7, 21) dem Einlassbereich (6, 24) einer jeweiligen Vorkammer (3, 23) zugeordnet ist.

5. Motor, insbesondere Verbrennungsmotor für ein Kraftfahrzeug,
**dadurch gekennzeichnet,**
**dass** er eine Vorrichtung (1, 20) nach einem der Ansprüche 1 bis 4 aufweist.

6. Fahrzeug, insbesondere Kraftfahrzeug mit einem Motor und mit einer Vorrichtung (1, 20) zur Erfassung eines Füllstandes nach einem der Ansprüche 1 bis 4.

## Claims

1. A device for determining a fill level of a medium inside a collecting container, with at least one measuring chamber connected in a media-conducting manner to the collecting container, in which measuring chamber an ultrasonic sensor is disposed, and with at least one pre-chamber disposed upstream of the measuring chamber, said pre-chamber comprising at least one inlet opening for the medium from the collecting container,
**characterised in that**
at least one flow damper (7, 21) for the medium is disposed in at least a partial region of the pre-chamber (3, 23),
that the flow damper (7) is at least one planar element (8), which comprises at least one deflection face (9, 9') with an overflow edge (10),
that the planar element (8) comprises, on at least one of its deflection faces (9, 9'), a plurality of damping bodies (11, 11', 11") projecting thereon, and
that each damping body (11, 11', 11") has a changing cross-section in the extension direction.

2. The device according to claim 1, **characterised in that** a plurality of pre-chambers (3, 23) are disposed upstream of the measuring chamber (4), said pre-chambers being connected in series one behind the ether in a media-conducting manner.

3. The device according to any one of claims 1 and 2, **characterised in that** a plurality of pre-chambers (3, 23) are provided with a flow damper (7, 21).

4. The device according to any one of claims 1 to 3, **characterised in that** each flow damper (7, 21) is assigned to the inlet region (6, 24) of a respective pre-chamber (3, 23).

5. An engine, in particular an internal combustion engine for a motor vehicle, **characterised in that** it comprises a device (1, 20) according to any one of claims 1 to 4.

6. A vehicle, in particular a motor vehicle with an engine and with a device (1, 20) for detecting a fill level according to any one of claims 1 to 4.

## Revendications

1. Dispositif pour la détermination d'un niveau de remplissage d'un fluide à l'intérieur d'un récipient collecteur, avec au moins une chambre de mesure reliée en conduction fluidique au récipient collecteur dans laquelle un capteur à ultrasons est disposé, et avec au moins une pré-chambre montée en amont de la chambre de mesure, laquelle présente au moins un orifice d'entrée pour le fluide provenant du récipient collecteur,
**caractérisé en ce que**,
dans au moins une zone partielle de la pré-chambre (3, 23), au moins un réducteur de débit (7, 21) pour le fluide est disposé,
**en ce que** le réducteur de débit (7) est au moins un élément de surface (8) qui présente au moins une surface de déviation (9, 9') avec une arête de trop-plein (10),
**en ce que** l'élément de surface (8) présente, sur au moins l'une de ses surfaces de déviation (9, 9'), une pluralité de corps de réduction (11, 11', 11") en saillie par rapport à celle-ci, et **en ce que** chaque corps de réduction (11, 11', 11'') présente, en direction d'extension, une section transversale qui varie.

2. Dispositif selon la revendication 1, **caractérisé en ce que** plusieurs pré-chambres (3, 23) sont montées en amont de la chambre de mesure (4), lesquelles sont reliées en rangée les unes derrière les autres en conduction fluidique.

3. Dispositif selon l'une des revendications 1 et 2, **caractérisé en ce que** plusieurs pré-chambres (3, 23) sont équipées d'un réducteur de débit (7, 21).

4. Dispositif selon l'une des revendications 1 à 3, **caractérisé en ce que** chaque réducteur de débit (7, 21) est associé à la zone d'entrée (6, 24) d'une pré-chambre (3, 23) respective.

5. Moteur, en particulier moteur à combustion interne pour un véhicule automobile, **caractérisé en ce qu'**il présente un dispositif (1, 20) selon l'une des revendications 1 à 4.

6. Véhicule, en particulier véhicule automobile avec un moteur et avec un dispositif (1, 20) pour la détection d'un niveau de remplissage selon l'une des revendications 1 à 4.
